# EUROPÄISCHE PATENTSCHRIFT

(11) **EP 2 228 308 B1**
(45) Veröffentlichungstag und Bekanntmachung des Hinweises auf die Patenterteilung: **31.12.2014**
(21) Anmeldenummer: 10002321.7
(22) Anmeldetag: 05.03.2010
(51) Int. Cl.: B65B 57/10

(54) **Produktionslinie mit einer Kontrollvorrichtung**
Production line comprising an inspection device
Ligne de fabrication avec un dispositif de contrôle

(30) Priorität: 10.03.2009 DE 102009012558
(43) Veröffentlichungstag der Anmeldung: 15.09.2010
(73) Patentinhaber: Wipotec Wiege- und Positioniersysteme GmbH, 67657 Kaiserslautern (DE)
(72) Erfinder: Düppre, Theo, Dipl.-Ing., 67663 Kaiserslautern (DE)
(74) Vertreter: Eder, Christian

(56) Entgegenhaltungen:
- EP-A1- 1 538 084
- WO-A1-2008/047060
- US-A- 3 942 900
- US-A1- 2007 164 222

## Beschreibung

Die Erfindung betrifft eine Produktionslinie mit einer Kontrollvorrichtung, insbesondere eine Abfüllanlage, sowie ein Kontrollverfahren hierfür.

Das Dokument WO 2008/047060 A1 zeigt eine Produktionslinie gemäß dem Oberbegriff des Anspruchs 1.

Derartige Produktionslinien und Verfahren finden beispielsweise in der Lebensmittelverarbeitung Anwendung. So werden in einer Produktionsmaschine, insbesondere einer Verarbeitungslinie bzw. Abfüll- und Verpackungslinie in eine beispielsweise durch Tiefziehen aus einer Kunststofffläche erzeugte einlagige Matrix von Becher bzw. Becherketten Lebensmittel gefüllt. Hierbei erfolgt das Befüllen der Becher üblicherweise getaktet über mehrere neben- und hintereinander angeordnete Füllstutzen, so dass eine gleichzeitige Verarbeitung mehrerer Becher, insbesondere einer flächigen Anordnung einer aus mehreren Zeilen und mehreren Spalten bestehenden Matrix bzw. des parallelen Produktstroms erfolgen kann.

Im Folgenden wird dieser parallele Produktstrom beispielsweise mit einer Deckfolie verschlossen und beispielsweise mittels einer Stanzeinrichtung in einzelne Produkte getrennt. Nach dem Trennen, Vereinzeln und Umwandeln in einen seriellen Produktstrom werden die Produkte meist mehrlagig übereinander verpackt.

Um das Vorhandensein von Fremdkörpern in den abgefüllten Bechern auszuschließen, werden die vereinzelten und verpackten Becher üblicherweise mittels Röntgenkontrollvorrichtung untersucht. Nachteiligerweise ist die Untersuchung mit herkömmlichen Kontrollvorrichtungen zeitaufwändig und langsamer als die eigentliche Verarbeitungsgeschwindigkeit der Abfüllanlage, so dass die Gesamtverarbeitungsgeschwindigkeit hierdurch verlangsamt wird. So werden beispielsweise in "PACK aktuell" vom 1. Juni 2008 Röntgenkontrollsysteme vorgestellt, welche ein Förderband für zu untersuchende Produkte aufweisen und nach dem Vereinzeln und Verpacken der Produkte an eine Abfüll- und Verpackungslinie angefügt werden können. Im Falle von detektierten Fremdkörpern und/oder fehlerhaften Füllständen müssen hierbei bereits gepackte Kartons oder andere Umverpackungen wieder geöffnet und das fehlerhafte Produkt aus einer Reihe von mehreren, meist übereinander angeordneten Produkten ausgesondert werden.

Das Dokument US 2007/0164222 A1 zeigt eine Röntgenkontrollvorrichtung, welche über vereinzelte Produkte quer zum Producktstrom bewegt wird.

Weiterhin können bei einer Untersuchung von Produkten mit herkömmlichen Kontrollsystemen ungenaue oder unrichtige Ergebnisse auftreten, welche durch die unexakte oder undefinierte Lage der einzelnen Produkte in einer Umverpackung begründet sind.

Der vorliegenden Erfindung liegt daher die Aufgabe zugrunde, eine Produktionslinie, insbesondere eine Abfüllanlage sowie ein Kontrollverfahren hierfür zu schaffen, welche auf kostengünstige und einfache Art und Weise eine Erhöhung der Genauigkeit der Kontrolle bei hoher Verarbeitungsgeschwindigkeit bzw. Durchsatzleistung ermöglicht.

Diese Aufgabe wird erfindungsgemäß durch eine Produktionslinie mit den Merkmalen des Patentanspruchs 1, sowie durch ein Kontrollverfahren mit den Merkmalen des Patentanspruchs 6 gelöst.

Erfindungsgemäß ist eine Kontrollvorrichtung als fester Bestandteil in die Abfüllanlage integriert, so dass der vorzugsweise getaktete Produktstrom vor dessen Vereinzelung von der Kontrollvorrichtung abgetastet werden kann. Hierbei können in einem Arbeitsgang mehrere Produkte untersucht werden, so dass durch diese parallele Verarbeitung des Produktstroms eine hohe Verarbeitungsgeschwindigkeit ermöglicht wird. Infolge der noch nicht vereinzelten Produkte sind die Produkte in ihrer Lage eindeutig definiert, so dass ungenaue oder gar unrichtige Untersuchungs- bzw. Abtastergebnisse aufgrund von Lagefehlern vermieden werden können.

Durch die Integration der Kontrollvorrichtung tief in die Füllmaschine hinein, wird zudem durch eine erschwerte oder gar verhinderte Zugänglichkeit für das Bedienpersonal ein verbesserter Schutz vor einer Quelle, insbesondere Strahlenquelle, der Kontrollvorrichtung gewährleistet.

Gemäß der Erfindung ist die Kontrollvorrichtung als Abtasteinrichtung, beispielsweise als Röntgen-, Mikrowellen-, Ultraschall-, Infraroteinrichtung etc. ausgebildet, welche einen Abtastweg im Wesentlichen quer oder schräg zur Produktbewegung aufweist. Hierdurch kann auf einfache und kostengünstige Art und Weise eine hohe Verarbeitungsgeschwindigkeit synchron zur Verarbeitungsgeschwindigkeit der Abfülleinrichtung gewährleistet werden. Durch einen nicht parallelen Abtastweg zur Produktbewegung kann vorteilhafterweise eine kürzere Baulänge und geringere Breite der Kontrollvorrichtung ermöglicht werden, da nicht mehr die gesamte Breite des Produktstroms mit einem entsprechend breiten und langen Abtastfeld gleichzeitig abgedeckt werden muss.

Zudem ist durch die geringere erforderliche Ausbreitung des Abtastfeldes weniger (Sende-)Leistung der Quelle, insbesondere Röntgenleistung, erforderlich, was neben der kleineren Bauform vorteilhafterweise auch einen weiter verbesserten Strahlenschutz und zudem eine höhere Lebensdauer der Quelle, beispielsweise einer teuren Röntgenröhre, zur Folge hat.

In bevorzugter Ausführungsform der Erfindung erfolgt die Abtastung des Produktstroms synchron im Takt der Abfülleinrichtung, also beispielsweise während eines Anhaltens oder während der Bewegung des Produktstroms (oft werden Stanze und Füllorgane getaktet mitbewegt), wobei ein Einsetzen der Bewegung der Kontrolleinrichtung auch bereits vor dem Beginn eines Abfüllzyklus, also beispielsweise vor einem Halten oder einem Weiterbewegen des Produktstroms erfolgen kann. Selbstverständlich ist es aber auch denkbar, den Produktstrom kontinuierlich abzutasten. Etwaige Produktbewegungspausen bzw. Taktpausen könnten hierbei beispielsweise durch Eigenbewegung der Kontrollvorrichtung relativ zur Produktbewegung oder durch Pausen zur Prozessverarbeitung überbrückt werden.

In weiterer Ausgestaltung der Erfindung arbeitet die Kontrollvorrichtung bidirektional. Hierdurch können vorteilhafterweise Pausen während der Rückbewegung der Kontrolleinrichtung vermieden und die Verarbeitungsgeschwindigkeit weiter erhöht werden.

Im Falle einer durchdringenden Strahlung, wie beispielsweise Röntgenstrahlung, sind Strahlenquelle und Sensor über- und unterhalb des Produktstroms derart örtlich zueinander angebracht, dass der Sensor im Bereich des Abtastfeldes liegt. Quelle und Sensor bewegen sich hierbei vorzugsweise synchron zueinander über den gesamten Abtastweg, um einen optimalen Abtastbereich über den Produktstrom zu gewährleisten.

Nach dem erfindungsgemäßen Verfahren wird der Produktstrom mit einem zur Produktbewegung nicht parallelen, beispielsweise im Wesentlichen senkrechten Abtastweg vorzugsweise linienförmig abgetastet, was auf einfache und kostengünstige Art und Weise eine schnelle, insbesondere auch parallele Verarbeitung eines vorzugsweise getakteten Produktstroms ermöglicht. Gleichzeitig kann durch diesen schräg oder quer zur Produktbewegung liegenden Abtastweg die Genauigkeit der Abtastung erhöht und die Ausdehnung des (statischen) Abtastfeldes bis hin zu einer nur ein oder wenige Produkte - in Richtung der Produktbewegung gesehenen - abdeckende kurze Linie begrenzt werden.

Hierdurch lassen sich störende Streueffekte vermindern und bei einer hochfrequenten Quelle, beispielsweise Röntgenstrahlung, aufwändige Abschirmungen (große Bleischürzen , etc.) für größere Abtastfelder vermeiden bzw. verringern.

Bei dem erfindungsgemäßen Verfahrens werden nicht vereinzelte, vorzugsweise zu einer Matrix zusammenhängende Produkte abgetastet, so dass deren Lage zusätzlich eindeutig definiert ist.

In weiterer Ausgestaltung des erfindungsgemäßen Verfahrens erfolgt die Abtastung, insbesondere Durchleuchtung, also beispielsweise gleichzeitige Bewegung des Sensors und Strahlers, bevorzugt bei Stillstand der Produkte bzw. des Produktstroms (beispielsweise in den Taktpausen der Abfüllanlage), so dass eine geringere Strahlungsintensität erforderlich ist und die Bildgenauigkeit erhöht wird. Zudem können hierdurch Schwappeffekte verringert werden.

Sowohl die erfindungsgemäße Produktionslinie als auch das erfindungsgemäße Verfahren können bei Einsatz einer Röntgendurchleuchteinheit neben der bekannten Fremdkörperinspektion und Siegelnahtkontrolle durch Bestimmung der Homogenität und/oder der Oberflächenhöhe des Füllgutes im Behältnis auch zur Füllmengenmessung und/oder -kontrolle (beispielsweise als Alternative zur Gewichtsbestimmung per Waage) benutzt werden.

Weitere vorteilhafte Ausgestaltungen der Erfindung ergeben sich aus den Unteransprüchen.

Die Erfindung wird nachfolgend anhand eines in der Zeichnung dargestellten Ausführungsbeispiels näher erläutert.

### In der Zeichnung zeigen:

- Fig. 1: eine Seitenansicht einer schematisch dargestellten erfindungsgemäßen Produktions- bzw. Abfüll- und Verpackungslinie mit einer Kontrollvorrichtung;
- Fig. 2: eine Draufsicht auf eine Produktionslinie nach Fig. 1 und
- Fig. 3: eine dreidimensionale Ansicht einer Kontrollvorrichtung als Einzelheit einer erfindungsgemäßen Produktionslinie nach Fig. 1 und Fig. 2.

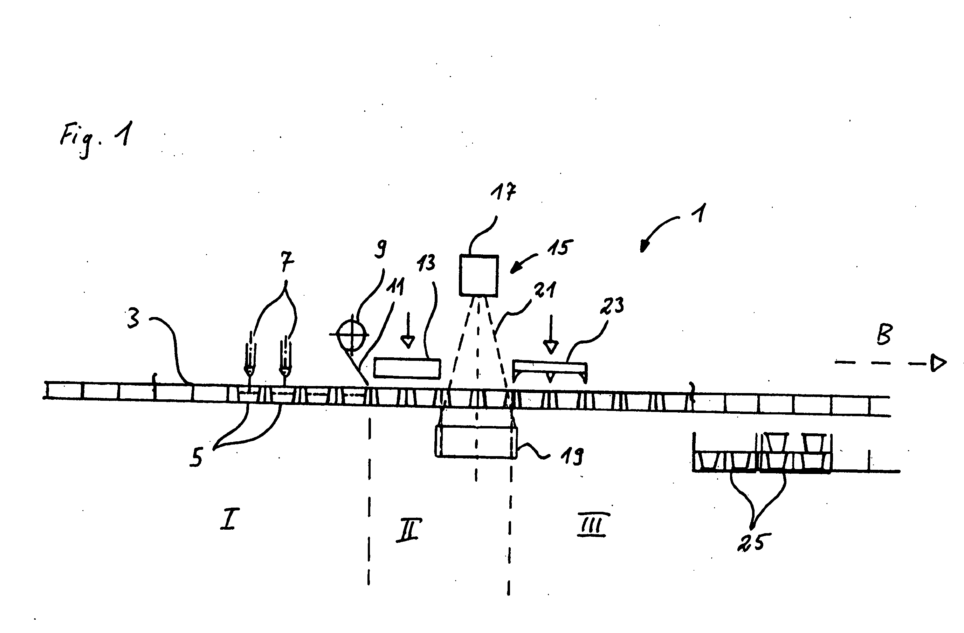

Die in Fig. 1 dargestellte Produktionslinie bzw. Abfüllanlage 1 dient zum Befüllen - insbesondere mit Lebensmitteln - Verschließen und Verpacken von Bechern 5 oder ähnlichen Behältnissen.

Die Becher 5 können hierbei beispielsweise mittels Tiefziehen aus einer Kunststofffläche 3 hergestellt werden, oder hergestellt worden sein, wobei in diese nach oben offenen Becher 5 mittels meist mehrfach vorhandener Füllstutzen 7, beispielsweise wie im Ausführungsbeispiel dargestellt, in einer Matrix von zwei Reihen und drei Spalten, Füllgut, insbesondere Lebensmittel, abgefüllt werden.

Nach dieser in Abschnitt I ersichtlichen Phase werden über eine von einer Rolle 9 mit der Bewegung und in Bewegungsrichtung B des Produktstromes abgewickelte Deckfolie 11 mittels einer beispielsweise thermischen Verschließeinheit die Becher 5 von oben verschlossen und mittel- oder, wie dargestellt, unmittelbar nachfolgend von der Kontrolleinrichtung 15 auf Verunreinigungen und Fremdkörper im Füllgut, insbesondere im Lebensmittel, untersucht.

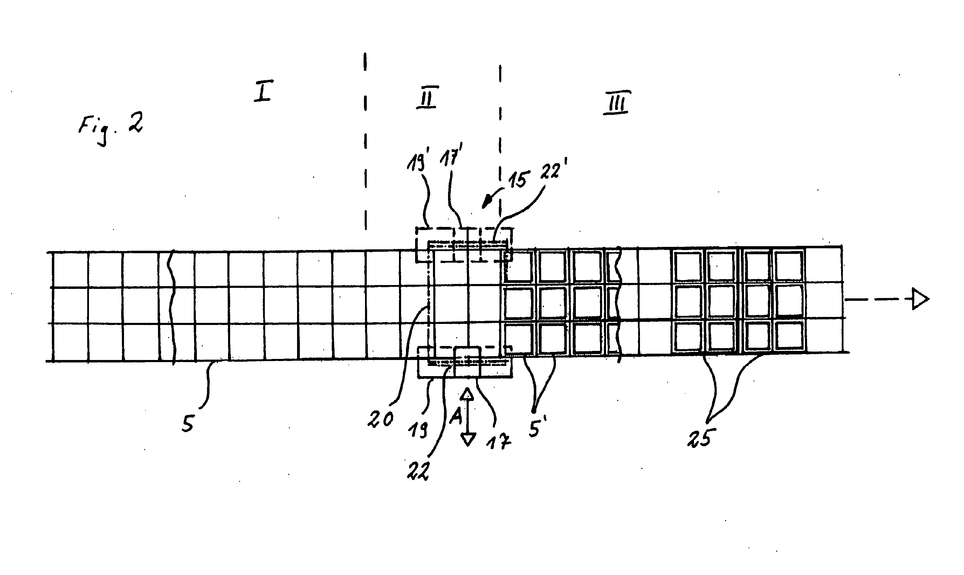

Wie aus Fig.1 und 2 ersichtlich, besteht der Produktstrom in Abschnitt I und II aus zusammenhängenden flächigen Becherketten, welche erst nach Durchlaufen der Kontrollvorrichtung 15 in Abschnitt III mittels einer von oben herab bewegbaren Stanze 23 in einzelne Becher 5' getrennt werden. Die getrennten Becher 5' werden im Folgenden in Umverpackungen wie beispielsweise Kartons 25 mehrlagig verpackt, wobei dies in beliebiger Anordnung der Becher in der Verpackung, beispielsweise, wie dargestellt, in flächiger 3 x 2-Matrix und mehrlagiger Anordnung übereinander, erfolgen kann.

Wie aus Fig. 1 und 2 ersichtlich, besteht der Produktstrom entlang seiner Bewegungsrichtung B in den Abschnitten I und II wenigstens teilweise oder gar zur Gänze aus zusammenhängenden Bechern, so dass die Lage der jeweils in einem Abtastbereich 20 befindlichen Becher, beispielsweise 3 x 2, sowohl zueinander, als vorzugsweise auch im gesamten Produktstrom eindeutig definiert ist.

Obwohl im Beispiel ein Abtastbereich 20 über zwei Zeilen und drei Spalten dargestellt ist, ist es selbstverständlich denkbar, den Abtastbereich über eine beliebige Anzahl zwischen einer und mehreren Zeilen (oder gar in mehren Lagen) über die gesamten Spalten des Produktstroms auszugestalten.

In dem dargestellten Ausführungsbeispiel erfolgt das Abfüllen über Füllstutzen 7 getaktet, so dass der Produktstrom bei in Bewegungsrichtung B stationären Füllstutzen 7 getaktet bewegt wird oder bei entsprechenden in Richtung B bewegbaren Füllstutzen 7 und kontinuierlicher Produktbewegung die Füllstutzen entsprechend getaktet bewegt werden.

Erfindungsgemäß arbeitet die Kontrollvorrichtung 15 synchron zur vorgenannten getakteten Bewegung, wobei sowohl ein Abtasten bzw. ein Durchleuchten im Takt des Befüllens, als auch im Gegentakt, also in der Pause des Befüllens möglich ist.

Vorzugsweise erfolgt das Abtasten zu einem Zeitpunkt des relativen Stillstands zwischen Kontrollvorrichtung 15 und Produktbewegung B in Richtung B gesehen, so dass hierdurch die erforderliche Strahlungsintensität verringert, die Bildgenauigkeit erhöht und Schwappeffekte verringert, oder gar vermieden werden können.

Die Kontrollvorrichtung 15 besteht aus einer, beispielsweise über dem Produktstrom angeordneten Röntgenstrahlungsquelle 17, mit einem sich vorzugsweise nach unten im spitzen Winkel ausbreitenden Abtastfeld und einem beispielsweise unter dem Produktstrom im Bereich dieses Abtastfelds 21 angeordneten Kamera- bzw. Zeilensensor 19.

Wie in Fig. 2 ersichtlich, werden in Richtung B des Produktstroms hierdurch beispielsweise zwei Zeilen von Bechern abgedeckt, wobei in der Breite des Produktstroms nur eine geringe Ausbreitung, insbesondere zeilenförmige Ausbreitung 22, vorhanden ist. Um den Produktstrom auch in der Breite abzutasten, wird die Quelle 17 synchron mit dem Zeilensensor 19, wie dargestellt, quer in Richtung A über dem Produktstrom von ihrer in Fig. 2 unteren ersten Position in eine obere zweite Endposition der Quelle 17', Zeilensensor 19' und Abtastlinie 22' bewegt, so dass hierdurch die gesamte Breite des Produktstroms im Bereich 20 abgetastet werden kann.

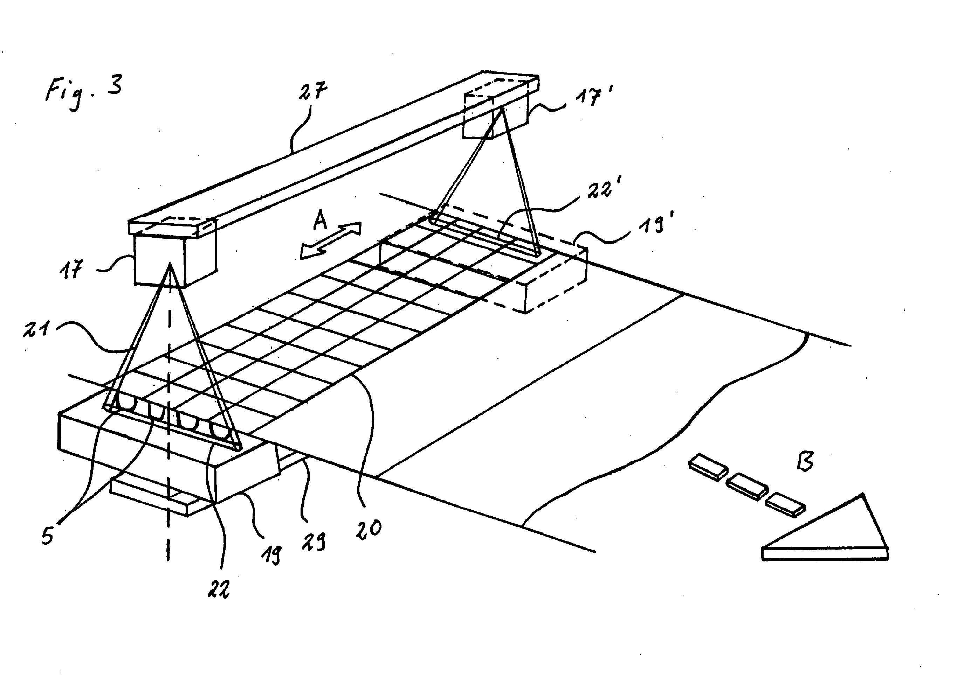

Wie aus Fig. 3 ersichtlich, weist die Kontrollvorrichtung 15 zur linearen Gleichbewegung in Richtung A für die Quelle 17 eine obere Linearachse 27 und für den Zeilensensor 19 eine untere Linearachse 29 auf, welche über geeignete Mittel eine kontinuierliche, zueinander synchrone Bewegung der Quelle 17 und des Sensors 19 über den gesamten Abtastbereich 20 ermöglichen.

Die baulichen Maßnahmen zur Realisierung der im Ausführungsbeispiel dargestellten Kontrollvorrichtung 15 sind selbstverständlich als nur schematisch anzusehen, wobei beispielsweise zur gleichförmigen linearen Bewegung der Quelle 17 und 19 zueinander verschiedene nicht näher dargestellte Lösungen für einen Fachmann evident sind. Die entsprechenden Linearschienen oder Linearmotoren können beispielsweise ohne mechanische Kopplung der Quelle 17 und des Sensors 19 zueinander elektronisch gesteuert gleichförmig und synchron zueinander bewegt werden, wobei es selbstverständlich auch denkbar ist, andere, beispielsweise eine mechanische Kopplung vorsehende Lösungen zu verwenden.

Vorzugsweise kann ein Abtasten nicht nur in der Vorwärtsbewegung in Richtung Position 17', 19', 22' der Quelle, des Sensors, der Abtastlinie, sondern auch in deren Rückbewegung hin zu ihrer mit den Bezugsziffern 17, 19, 22 dargestellten Position erfolgen. Durch diese bidirektionale Abtastung während der Vorwärts- und Rückwärtsbewegung entlang der Achse A quer zur Produktbewegung B kann eine höhere mögliche Verarbeitungsgeschwindigkeit erreicht werden.

Zudem ist es trotz taktsynchroner Bewegung zur Abfülleinrichtung bzw. zum Abfüllstutzen 7 möglich, die jeweilige Bewegung der Quelle 17 und des Sensors 19 und damit der Abtastlinie 22 bereits vor einem relativen Stillstand zwischen Kontrollvorrichtung 15 und Produktstrom bezüglich dessen Bewegungsrichtung B einzusetzen, um erst bei Erreichen der Abtastlinie 22 der ersten am Rand angeordneten Becherspalte (im dargestellten Beispiel die äußeren Spalten des dreispaltigen Produktstroms) einen relativen Stillstand zwischen Kontrollvorrichtung 15 und Produktstrom in Richtung B zu erhalten.

Wird nun bei der Abtastung mittels der Kontrollvorrichtung 15 eine Verunreinigung, ein Fremdkörper oder ein anderes unerwünschtes Ergebnis wie beispielsweise unrichtiger Füllstand etc. eines oder mehrerer Becher detektiert, können diese Becher in der dargestellten Anlage nach der Erfindung vorteilhafterweise bereits vor einem Verpacken, also nach dem Trennen der Becher in einzelne Produkte oder gar einem Vereinzeln zu einem seriellen Produktstrom ausgesondert werden, ohne dass hierfür wie sonst bei einem Durchleuchten der Umverpackungen notwendiges Auspacken aus diesen Umverpackungen und Entfernen des oder der jeweiligen fehlerhaften Einzelprodukte erforderlich wäre.

Durch das erfindungsgemäße Verfahren und die erfindungsgemäße Produktionslinie ist es aufgrund der parallelen oder gar flächigen Verarbeitung des Produktstroms mittels der Kontrollvorrichtung 15 möglich, den Füllstand des Füllgutes exakt zu bestimmen, da die geometrische Anordnung der Becher zueinander während der Abtastung präzise ist und Fehlergebnisse aufgrund verdrehter oder verschobener Lage wie bei der Untersuchung als Einzelbecher im seriellen vereinzelten Produktstrom oder in der Umverpackung vermieden werden kann.

Auch wenn im Ausführungsbeispiel ein Abtastweg A quer zur Produktbewegung B dargestellt ist, ist es selbstverständlich auch denkbar, den Abtastweg in einem anderen, einen Winkel > 0 zu Bewegung B, einschließenden Winkel zu wählen und dennoch die vorstehend geschilderten Vorteile zu ermöglichen.

Insbesondere sei darauf hingewiesen, dass die erfindungsgemäße Anlage auch mit einer in Richtung der Produktbewegung B arbeitenden Kontrollvorrichtung möglich ist, wobei beispielsweise in diesem Fall die Kontrollvorrichtung keinen Abtastweg A aufweist, sondern stattdessen einen quer oder schräg, jedoch über die gesamte Produktstrombreite reichende Abtastlinie oder Abtastfeld aufweist. Auch in dieser Ausgestaltung kann durch die Anordnung einer derartigen Kontrollvorrichtung im Kontrollstrom mittel- oder unmittelbar nach der Abfüll- und evtl. der Verschließeinheit oder vor der Vereinzelung wesentliche vorstehend erläuterte Vorteile wie beispielsweise schnellere Verarbeitung, bessere Abschirmung durch bauliche Integration und schlechtere unerwünschte Zugänglichkeit für das Bedienpersonal etc. erreicht werden.

## Patentansprüche

1. Produktionslinie mit einer Kontrollvorrichtung (15) für einen wenigstens aus einer oder mehreren Spalten bestehenden Produktstrom von Produkten (5),
wobei die Kontrollvorrichtung (15) in der Produktionslinie (1) derart angeordnet ist, so dass eine Kontrolle der Produkte (5) vor einer Vereinzelung (23) der Produkte (5) erfolgt,
**dadurch gekennzeichnet, dass**
die Kontrollvorrichtung als Abtasteinrichtung (15) ausgebildet ist, welche einen zur Produktbewegung (B) nicht parallelen Abtastweg (A) aufweist, entlang welchem sich die Abtasteinrichtung (15) bewegt und die Kontrollvorrichtung eine Quelle (17) einer Strahlung oder Welle und einen Sensor (19) aufweist, welche jeweils ortsfest komplementär zueinander über und unterhalb der Produktionslinie angeordnet sind.

2. Produktionslinie nach einem der vorhergehenden Ansprüche, **dadurch gekennzeichnet, dass** die Produktionslinie (1) getaktet arbeitet und die Kontrollvorrichtung (15) derart ausgebildet ist, dass sie synchron zum Takt der Produktionslinie (1) arbeitet.

3. Produktionslinie nach einem der vorhergehenden Ansprüche, **dadurch gekennzeichnet, dass** die Kontrollvorrichtung (15) bidirektional arbeitet.

4. Produktionslinie nach einem der vorhergehenden Ansprüche, **dadurch gekennzeichnet, dass** Quelle (17) und Sensor (19) sich synchron zueinander über den Abtastweg (A) bewegen.

5. Produktionslinie nach einem der vorhergehenden Ansprüche, **dadurch gekennzeichnet, dass** die Kontrollvorrichtung als Röntgendurchleuchteinheit (15) ausgebildet ist.

6. Kontrollverfahren für eine Produktionslinie nach einem der vorhergehenden Ansprüche, bei der die Kontrollvorrichtung (15) entlang einem quer oder schräg zur Produktbewegung (B) liegenden Abtastweg (A) bewegt wird.

7. Verfahren nach Anspruch 6, **dadurch gekennzeichnet, dass** die Abtastung bidirektional erfolgt.

8. Verfahren nach Anspruch 6 oder 7, **dadurch gekennzeichnet, dass** die Abtastung linienförmig (22) erfolgt.

## Claims

1. Production line with an inspection apparatus (15) for a product stream (5) consisting at least of one or more columns,
wherein the inspection apparatus (15) is arranged in the production line (1) in such a way that an inspection of the products (5) takes place prior to a separation (23) of the products (5),
**characterised in that**
the inspection apparatus takes the form of a scanning device (15) which exhibits a scan path (A) which is not parallel to the product motion (B) and along which the scanning device (15) moves, and the inspection apparatus exhibits a source (17) of a radiation or wave and a sensor (19), which have each been arranged to be stationary, complementary to one another above and below the production line.

2. Production line according to one of the preceding claims, **characterised in that** the production line (1) operates in pulsed manner and the inspection apparatus (15) has been designed in such a way that it operates synchronously with the pulse cycle of the production line (1).

3. Production line according to one of the preceding claims, **characterised in that** the inspection apparatus (15) operates bidirectionally.

4. Production line according to one of the preceding claims, **characterised in that** the source (17) and the sensor (19) move over the scan path (A) synchronously with one another.

5. Production line according to one of the preceding claims, **characterised in that** the inspection apparatus takes the form of a fluoroscopic X-ray unit (15).

6. Inspection process for a production line according to one of the preceding claims, wherein the inspection apparatus (15) moves along a scan path (A) situated at right angles or obliquely with respect to the product motion (B).

7. Process according to Claim 6, **characterised in that** the scanning takes place bidirectionally.

8. Process according to Claim 6 or 7, **characterised in that** the scanning takes place in the form of a line (22).

## Revendications

1. Ligne de production dotée d'un dispositif de contrôle (15) pour un flux de produits (5) constitué d'au moins une ou plusieurs colonnes,
le dispositif de contrôle (15) étant disposé dans la ligne de production (1) de telle façon qu'un contrôle des produits (5) a lieu avant la séparation (23) des produits (5),
**caractérisée en ce que**
le dispositif de contrôle est conçu comme un dispositif de balayage (15) qui présente un trajet de balayage (A), non parallèle au mouvement des produits (B), le long duquel le dispositif de balayage (15) se déplace et **en ce que** le dispositif de contrôle comprend une source (17) de rayonnement ou d'une onde et un capteur (19), disposés de manière fixe et complémentaire au-dessus et en dessous de la ligne de production.

2. Ligne de production selon l'une des revendications précédentes, **caractérisée en ce que** la ligne de production (1) fonctionne de manière cadencée et le dispositif de contrôle (15) est conçu de façon à fonctionner de manière synchronisée par rapport à la cadence de la ligne de production (1).

3. Ligne de production selon l'une des revendications précédentes, **caractérisée en ce que** le dispositif de contrôle (15) fonctionne de manière bidirectionnelle.

4. Ligne de production selon l'une des revendications précédentes, **caractérisée en ce que** la source (17) et le capteur (19) se déplacent de manière synchrone entre eux le long du trajet de balayage (A).

5. Ligne de production selon l'une des revendications précédentes, **caractérisée en ce que** le dispositif de contrôle est conçu comme une unité de contrôle radioscopique (15).

6. Procédé de contrôle pour une ligne de production selon l'une des revendications précédentes, dans lequel le dispositif de contrôle (15) est déplacé le long d'un trajet de balayage (A) transversal ou oblique par rapport au trajet des produits (B).

7. Procédé selon la revendication 6, **caractérisé en ce que** le balayage s'effectue de manière bidirectionnelle.

8. Procédé selon la revendication 6 ou 7, **caractérisé en ce que** le balayage s'effectue de manière linéaire (22).
